## Europäisches Patentamt

## European Patent Office

## Office européen des brevets

(11) Veröffentlichungsnummer: **0 026 345**
**B1**

(12) **EUROPÄISCHE PATENTSCHRIFT**

(45) Veröffentlichungstag der Patentschrift:
**18.05.83**

(21) Anmeldenummer: **80105236.6**

(22) Anmeldetag: **03.09.80**

(51) Int. Cl.³: **B 65 G 11/18, E 04 G 3/06**

(54) Schüttgutfördervorrichtung.

(30) Priorität: **11.09.79 DE 2936594**

(43) Veröffentlichungstag der Anmeldung:
**08.04.81 Patentblatt 81/14**

(45) Bekanntmachung des Hinweises auf die Patenterteilung:
**18.05.83 Patentblatt 83/20**

(84) Benannte Vertragsstaaten:
**AT BE CH FR GB IT LI NL SE**

(56) Entgegenhaltungen:

**CH-A-291 759**
**DE-A-2 633 016**
**DE-C-924 480**
**GB-A-689 964**
**US-A-1 712 974**
**US-A-3 135 351**
**US-A-3 926 290**
**US-A-3 949 850**

(73) Patentinhaber: **Eikelmann, Reinhard, Buchengrund 10,
D-4955 Hille 1 (DE)**

(72) Erfinder: **Eikelmann, Reinhard, Buchengrund 10,
D-4955 Hille 1 (DE)**

ACTORUM AG

Schüttgutfördervorrichtung

Die Erfindung betrifft eine Schüttgutfördervorrichtung gemäss Oberbegriff des Anspruches 1.

Schuttrutschen der genannten Art werden vorteilhaft in der Bauindustrie bei Neu- oder Umbau von Gebäuden eingesetzt, um ein einfaches und wegen geringer Staubentwicklung umweltfreundliches Austragen von Bauschutt insbesondere aus höher gelegenen Stockwerken zu ermöglichen.

Es ist bekannt, zu diesem Zweck Rohre senkrecht in einem vor der Aussenfront des Gebäudes errichteten Baugerüst zu verlagern, die mittels Schaufeln oder, sofern das Baugerüst an der Aufgabeseite eine entsprechende Bühne aufweist, mittels Schubkarren o.dgl. mit Bauschutt beschickt werden. Am Austragsende der Schuttrutsche ist normalerweise zum Verladen auf Lastkraftwagen oder in Container eine schrägliegende Austragsschurre angeordnet.

Die vorgenannte Lösung erfordert die Errichtung eines Baugerüstes an der Aussenfront des Gebäudes und ist wegen der damit verbundenen Kosten unwirtschaftlich, ein Punkt, der besonders bei Innenumbauten von Gebäuden ins Gewicht fällt. In diesen Fällen werden auch bereits vorhandene Grün- und Gartenanlagen durch das Errichten eines Baugerüstes stark in Mitleidenschaft gezogen. Ein weiterer Nachteil zeigt sich beim Austragen von Bauschutt aus grossflächigen Gebäudekomplexen. Da ein Standortwechsel des Baugerüstes und der darin gelagerten Schuttrutsche ohne umfangreiche De- und Remontagearbeiten nicht möglich ist und daher auch nicht durchgeführt wird, muss der Bauschutt innerhalb des Gebäudes über z.T. lange Strecken transportiert werden.

Als weitere Lösung zum Austragen von Bauschutt ist in der Bauindustrie der Einsatz von Schuttrohren bekannt, die trichterförmig ineinandergreifen, mittels Ketten oder Seilen miteinander verbunden werden und mit dem oberen Ende an ausserhalb oder innerhalb des Gebäudes angebrachten Aufhängevorrichtungen aufgehängt sind, beispielsweise an Ankerschrauben, die in Gebäudeteile eingelassen und nach Abschluss der Arbeiten wieder entfernt werden.

Als Aufhängevorrichtung kann auch eine Einrichtung dienen, wie sie durch die CH-A-291 759 bekanntgeworden ist. Bei dieser Einrichtung kragt aus dem Gebäude eine Tragschiene heraus, die mit einem Gerüst verbunden ist, das zwischen den oberen und unteren Begrenzungsflächen der Gebäudeöffnung eingespannt und zusätzlich mit senkrechten Gebäudeteilen verspannt ist. Hierbei ist nachteilig, dass sowohl die zwischen den Begrenzungsflächen angeordneten Stützen, als auch die Stützen, die das aus dem Gebäude herauskragende Ende der Tragschiene abstützen, zur Anpassung an die jeweilige lichte Höhe der Gebäudeöffnung längenveränderlich sein müssen.

Ferner kann diese Einrichtung nicht eingesetzt werden, wenn wegen vorhandener Fensterbänke und/oder Jalousiekästen die Einspannung der vertikalen Stützen nicht möglich ist.

Der Vorteil bei der Verwendung einer aus Schuttrohren gebildeten Schuttrohrkette ist darin zu sehen, dass kein Baugerüst erforderlich und dass diese Schuttrohrkette in der Längsachse flexibel ist. Nachteilig ist jedoch, dass zum Hochziehen innerhalb des Gebäudes angeordnete Zugeinrichtungen erforderlich sind. Ausserdem kann die Beschickung mit Bauschutt nur mittels Schaufeln erfolgen, da im Aufgabebereich keine Arbeitsbühne angeordnet ist, die mit Schubkarren o.dgl. befahren werden kann.

Aufgabe der Erfindung ist es, eine Schüttgutfördervorrichtung der im Oberbegriff des Anspruches 1 angegebenen Art, so zu gestalten, dass sie zerlegbar und transportabel ist, einfach und schnell ohne Einsatz zusätzlicher Hilfseinrichtungen und ohne zusätzliche Verankerungen an Gebäuden angebracht werden kann, dass sie unabhängig von der Grösse der Gebäudeöffnungen und der Beschaffenheit der Begrenzungsflächen, und dass sie gefahrlos mit handgeschobenen Flurfördergeräten befahr- und beschickbar ist.

Erfindungsgemäss wird die Aufgabe durch die im kennzeichnenden Teil des Patentanspruches 1 angegebenen Massnahmen gelöst.

Die durch die Erfindung erreichten Vorteile werden im wesentlichen darin gesehen, dass die Einzelteile der zum Aufhängen der Schuttrutsche dienenden Haltevorrichtung ohne Einsatz zusätzlicher Hilfsmittel innerhalb des Gebäudes transportiert und am vorgesehenen Einsatzort schnell und einfach zusammengesetzt, aufgerichtet und am Gebäude verspannt werden können, dass keine Bauteile der Haltevorrichtung längenveränderlich sein müssen, dass die ausserhalb des Gebäudes am Boden zusammengesetzte Schuttrutsche mittels der mit der Haltevorrichtung verbundenen Zugeinrichtungen hochgezogen werden kann und dass die in der Haltevorrichtung einhängbare Wanne ein unfallfreies Beschicken mit Bauschutt mittels Schubkarren o.dgl. ermöglicht. Ein Wechsel des Einsatzortes ist ohne zeitraubende De- und Remontagearbeiten durchführbar, so dass in grossflächigen Gebäudekomplexen die Transportwege klein gehalten werden können.

Um sich den baulichen Gegebenheiten besser anpassen zu können, ist es vorteilhaft, die Haltevorrichtung entsprechend den Ansprüchen 2 und 3 auszubilden. Durch die im Anspruch 4 gekennzeichnete kardanische Aufhängung ist es möglich, das Austragsende der Schuttrutsche gegenüber der durch das Aufgabeende verlaufende vertikale Achse zu verschieben, so dass der Standort des den Bauschutt abfahrenden Transportfahrzeuges unabhängig vom Aufgabeende wählbar ist.

Ein die Erfindung veranschaulichendes Ausführungsbeispiel ist in den Fig. 1 bis 3 dargestellt und wird nachstehend beschrieben:

Fig. 1 die Seitenansicht
Fig. 2 die Ansicht in Richtung A
Fig. 3 die Draufsicht.

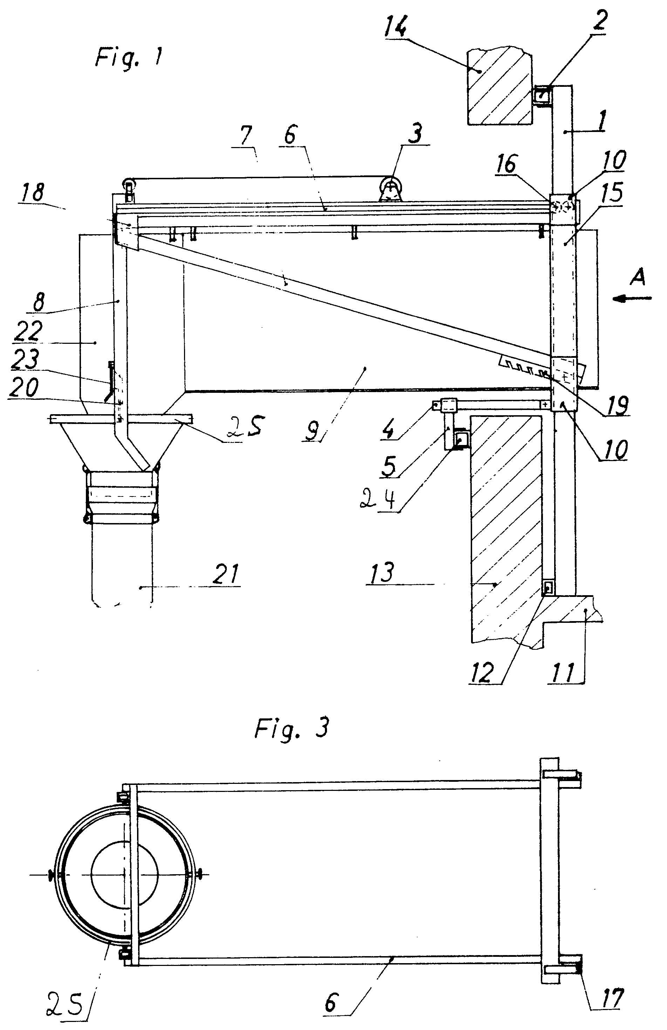

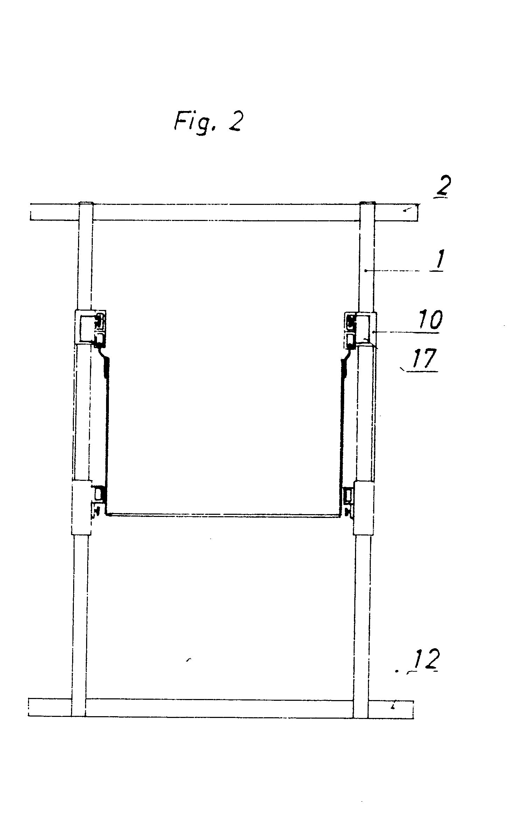

Gemäss den Fig. 1 bis 3 sind im Innern eines Gebäudes vor einer Gebäudeöffnung, beispielsweise einem Fenster zwei im Abstand zueinander parallel laufende Stützen 1 auf einer Decke 11 stehend angeordnet und an ihren oberen und unteren Enden durch die Querträger 2 und 12 lösbar miteinander verbunden. Jede der zweckmässigerweise aus Vierkantrohr gefertigten Stützen 1 ist mit zwei Führungshülsen 10 versehen, die durch Lasche 15 miteinander verbunden und in jeder gewünschten Höhenlage mittels beispielsweise einer nicht dargestellten Klemmschraube arretierbar sind. An jede der unteren Führungshülsen 10 ist um eine horizontale Achse in bestimmten Grenzen schwenkbar ein aus dem Gebäude ragender Zugarm 4 angelenkt, auf dem ein mittels Klemmschraube arretierbarer Stützschenkel 5 verschiebbar gelagert ist. Die unteren Enden der Stützschenkel 5 sind lösbar mit dem Querträger 24 verbunden. Mittels der Zugarme 4 und der Stützschenkel 5 werden die Stützen 1 vor der Gebäudeöffnung gehalten, wobei sie sich über den Querträger 2 von innen am Sturz 14 und über den Querträger 24 von aussen an der Brüstung 13 abstützen. Durch die Verschiebbarkeit der Führungshülsen 10 kann die Höhenlage der Zugarme 4 der Brüstungshöhe angepasst werden.

Mit den Führungshülsen sind die jeweils aus Zugstrebe 6 und Druckstrebe 7 gebildeten Kragarme lösbar verbunden. Die Zugstrebe 6 ist aus zwei Vierkantrohren zusammengesetzt, von denen das obere seitlich und das untere zum Boden hin geschlitzt ist. Die Zugstrebe 6 stützt sich auf zwei innerhalb des Vierkantrohres liegende Rollen 16 ab, die auf mit der oberen Führungshülse 10 verbundenen Bolzen drehbar gelagert sind, und liegt mit dem Anschlag 17 an der Führungshülse 10 an. Die Druckstrebe 7 liegt mit dem vorderen Ende in einer mit der Zugstrebe 6 verbundenen Tasche 18 und stützt sich mit dem hinteren Ende über die Rasterschiene 19 auf einem mit der unteren Führungshülse 10 verbundenen Bolzen ab.

Diese Lösung ermöglicht es, die Neigung der Zugstrebe 6 gegenüber der Stütze 1 zu verändern, so dass diese Vorrichtung auch an geneigten Gebäudeteilen, beispielsweise Dächern, angebracht werden kann. Das vordere Ende der Druckstrebe ist mit einem T-förmigen Aufsatz versehen, der in den unteren Schlitz der Zugstrebe 6 ragt. Die U-förmige Aufhängevorrichtung 8 ist mit den Zugstreben 6 des Kragarmes lösbar verbunden. In den Taschen 20 der senkrechten Schenkel hängt das Kardangelenk des Trichters 25, an dem die Schuttrohrkette 21 aufgehängt ist. Auf den Zugstreben 6 sind Handwinden 3 angebracht. In den unteren Schlitzen der Zugstreben 6 hängt eine zusammenklappbare U-förmige Wanne 9 sowie eine Schutzhaube 22.

Die Montage vorbeschriebener Vorrichtung ist leicht durchführbar. Nachdem die Einzelteile innerhalb des Gebäudes bis zum Einsatzort transportiert sind, werden zunächst die Stützen 1, Führungshülsen 10, Zugarme 4, Stützschenkel 5 und die Querträger 2, 12 und 24 vor der Gebäudeöffnung auf der Gebäudedecke zusammengesetzt, aufgerichtet und mit dem Gebäude verspannt. Im Anschluss werden die Zugstreben 6 auf den Rollen 16 bis zum Anschlag 17 aus dem Gebäude herausgefahren. Die Druckstrebe 7 wird mit ihrem T-förmigen Aufsatz in den unteren Schlitz der Zugstrebe 6 gehängt, bis zur Tasche 18 vorgeschoben und am Bolzen der unteren Führungshülse eingerastet. Im Anschluss daran werden nacheinander Schutzhaube 22 und Wanne 9 in die unteren Schlitze der Zugstreben 6 eingehängt und in Position geschoben. Die Vorrichtung ist nun gefahrlos begehbar.

Nachdem die Aufhängevorrichtung 8 montiert ist, kann die vor dem Gebäude auf dem Boden zusammengesetzte Schuttrutsche einschliesslich Trichter mittels der Handwinden 3 hochgezogen werden. Dabei dienen die abgeschrägten Schenkel der Aufhängevorrichtung zur Führung der seitlichen Bolzen des Kardangelenkes. Die Bolzen gleiten an den Schenkeln entlang, heben die Klappen 23 an und können ungehindert in die Taschen 20 eindringen. Die Schuttrutsche wird nun soweit abgesenkt, dass sie frei in den Taschen hängt.

Die Klappen 23 ermöglichen ein selbsttätiges Aushängen der Schuttrutsche. Zur Demontage wird die Schuttrutsche zunächst weiter hochgezogen. Die Bolzen des Kardangelenkes heben die Klappen 23 an und gleiten an ihnen entlang. Nachdem die Schuttrutsche der Klappenlänge entsprechend angehoben ist, klappen diese wieder um und verdecken die Taschen 20, so dass die Bolzen beim Senken nicht wieder in die Taschen eindringen können.

**Patentansprüche**

1. Schüttgutfördervorrichtung zum Beseitigen von Bauschutt oder dgl. durch eine Maueröffnung, z.B. einem Fenster, aus einem Gebäude, bestehend aus einer aus ineinandergreifenden, miteinander verbundenen Rohren gebildeten ausserhalb des Gebäudes aufgehängten Schuttrutsche (21) und einer Haltevorrichtung dafür, dadurch gekennzeichnet, dass die Haltevorrichtung aus zwei parallel und im wesentlichen vertikal zugeordneten Stützen (1), welche zur Auflage auf der hinter der Maueröffnung befindlichen Decke (11) dienen, besteht und die an ihren Enden durch je einen Querträger (2, 12) verbunden sind, wobei diese zur Anlage an den ober- bzw. unterhalb der Maueröffnung befindlichen inneren Wandbereich (14, 13) dienen, wobei an jede der Stützen (1) je ein Kragarm, der aus einer Zugstrebe (6) und einer Druckstrebe (7) gebildet ist, lösbar und höhenverschiebbar befestigt ist, dass weiters jede Stütze (1) mit je einem horizontalen Zugarm (4) verbunden ist und diese über je einen verschiebbar befestigten, vertikalen Stützschenkel (5) und einen diese beiden verbindenden, horizontalen Querträger (24) zur Abstützung an der unterhalb der Maueröffnung befindlichen Aussenwand (13) ausgebildet ist, dass an den Kragarmen eine Aufhängevorrichtung (8) für die Schuttrutsche (21) und Zugeinrichtungen (3) befestigt sind und eine zwischen die Kragarme einhängbare, begehbare und mit handgeschobenen Flurfördergeräten befahrbare zusammenklappbare Wanne (9) vorgesehen ist.

2. Schüttgutfördervorrichtung nach Anspruch 1, dadurch gekennzeichnet, dass die Kragarme (6, 7) und Zugarme (4) über jeweils eine verschiebbar befestigte Führungshülse (10) mit den Stützen (1) verbunden sind.

3. Eine Schüttgutfördervorrichtung gemäss den Ansprüchen 1 und 2, gekennzeichnet durch längenveränderliche Stützen (1).

4. Eine Schüttgutfördervorrichtung gemäss den Ansprüchen 1 bis 3, gekennzeichnet durch eine kardanische Aufhängung (25) der Schuttrutsche.

**Revendications**

1. Dispositif destiné à évacuer d'un bâtiment des gravats, ou déblais analogues, par une ouverture d'un mur de ce bâtiment, une fenêtre par exemple, et composé d'un couloir de déversement (21) suspendu à l'extérieur du bâtiment et formé de tuyaux engagés les uns dans les autres et reliés entre eux, et d'un système de fixation de ce couloir, dispositif caractérisé en ce que le système de fixation se compose de deux étais (1) disposés parallèlement et sensiblement verticalement, qui servent d'appuis sur le plancher (11) se trouvant derrière l'ouverture du mur et qui sont reliés à leurs extrémités par des traverses respectives (2, 12), celles-ci servant d'appuis contre les parties (14, 13) de la paroi intérieure du mur situées respectivement au-dessus et en-dessous de l'ouverture, un bras en porte-à-faux, qui est formé d'un tirant (6) et d'une contrefiche (7), étant fixé amoviblement et à une hauteur réglable à chacun de ces étais (1);

chaque étai (1) est relié à un tirant horizontal (4) qui, par l'intermédiaire d'un bras vertical de support (5), qui peut y coulisser et y être immobilisé, et d'une traverse horizontale (24) reliant les deux bras de support, est destiné à s'appliquer contre la partie (13) de la paroi extérieure située sous l'ouverture du mur;

un étrier (8) de suspension de couloir de déversement (21) et des dispositifs de traction (3) sont fixés aux bras en porte-à-faux; et

un couloir en U (9) repliable et utilisable, sur lequel peuvent circuler des chariots de manutention poussés manuellement, est accroché entre ces bras en porte-à-faux.

2. Dispositif selon la revendication 1, caractérisé en ce que les bras en porte-à-faux (6, 7) et les tirants (4) sont reliés aux étais (1) respectifs par l'intermédiaire de colliers de guidage (10) respectifs, qui peuvent coulisser sur ces étais et y être immobilisés.

3. Dispositif selon l'une des revendications 1 et 2, caractérisé en ce que la longueur des étais (1) est réglable.

4. Dispositif selon l'une quelconque des revendications 1 à 3, caractérisé en ce que le couloir de déversement (21) est soutenu par une suspension (25) à la Cardan.

**Claims**

1. Bulk material conveying device for the removal of building rubble or the like through a wall opening, for example a window, from a building and consisting of a rubble chute (21), suspended externally of the building and formed of interengaging tubes connected one with the other, and a retaining device therefor, characterised thereby, that the retaining device consists of two parallel supports (1), which are associated substantially vertically, serve for resting on the ceiling (11) disposed behind the masonry opening and which are connected at each of their ends by a respective crossbeam (2, 12), wherein these serve for resting against the internal wall region (14, 13) disposed respectively above and below the wall opening, wherein a respective cantilever, which is formed of a tie rod (6) and a strut (7), is detachably and vertically movably fastened to each of the supports (1), that furthermore each support (1) is connected with a respective horizontal tie arm (4) and this is adapted for supporting against the outside wall (13) disposed below the wall opening through a respective displaceably fastened, vertical support limb (5) and a horizontal crossbeam (24) connecting both these, that a suspension device (8) for the rubble chute (21) and hoisting equipments (3) are fastened to the cantilevers and a trough (9) is provided, which is foldable together, suspendable between the cantilevers, walkable and passable by manually pushed cart devices.

2. Bulk material conveying device according to claim 1, characterised thereby, that the cantilevers (6, 7) and tie arms (4) are connected with the supports (1) through a respective displaceably fastened guide sleeve (10).

3. Bulk material conveying device according to the claims 1 and 2, characterised by supports (1) variable in lenght.

4. Bulk material conveying device according to the claims 1 to 3, characterised by a cardanic suspension (25) of the rubble chute.

Fig. 1

Fig. 3

Fig. 2